# EUROPEAN PATENT APPLICATION

(11) **EP 2 636 900 A1**
(43) Date of publication of application: **11.09.2013**
(21) Application number: 12158523.6
(22) Date of filing: 08.03.2012
(51) Int. Cl.: F03G 7/06, F03G 7/00

(54) **Process and apparatus for producing mechanical or electrical power using a lcst polymeric system**

(71) Applicant: Akzo Nobel Chemicals International B.V., 3811 MH Amersfoort (NL)
(72) Inventor: Custers, Johannes Petrus Aldegonda, NL-6095 AG BAEXEM (NL); Keurentjes, Johannes Theodorus Faustinus, NL-5708 EH HELMOND (NL); Ten Kate, Antoon Jacob Berend, NL-6814 MT ARNHEM (NL); Van Asseldonk, Dirk Theodorus Andreas, NL-5494 PV VEGHEL (NL); De Groot, Matheus Theodorus, NL-3581 RN UTRECHT (NL); Setz, Gerhardus Johannes Alfonsus Maria, NL-7552 HN HENGELO (NL)
(74) Representative: De Vries, Adriaan Jacobus

(57) **Abstract**

Process for producing mechanical or electrical power comprising a step of bringing a LCST polymeric system sequentially and repeatedly into contact with a first aqueous stream to bring said polymer system in a first state and with a second aqueous stream to bring said polymer system in a second state, in the course of which an osmotic pressure difference is effectuated between the first state and the second state by using a first aqueous stream having a temperature which is higher than the LCST of said polymer system when it is in contact with said first aqueous stream and a second aqueous stream having a temperature which is lower than the LCST of said polymer system when it is in contact with said second aqueous stream, and wherein said difference in osmotic pressure is used to generate mechanical or electrical power. Furthermore the apparatus produces mechanical or electrical power from at least two aqueous streams.

## Description

The present invention relates to a process for producing mechanical or electrical power using a LCST polymeric system. The present invention furthermore relates to an apparatus for producing mechanical or electrical power using such a LCST polymeric system.

A LCST polymeric system is herein defined as a systemcomprising one or more uncrosslinked or crosslinked polymers and water that displays a LCST between 0 and 100°C.
The LCST, the lower critical solution temperature, is the critical temperature below which all components in the polymeric system are miscible and above which the components are only partly miscible. As the skilled person will understand, for polymeric systems, miscible does not necessarily mean one homogeneous phase system. For instance, in crosslinked systems extensive swelling is also regarded as miscible. Polymeric systems exhibiting LCST behaviour are also often denoted as thermoresponsive polymeric systems. Nowadays thermoresponsive or LCST polymeric systems play an important role in pharmaceutical research, in particular in drug delivery studies. A lot of pharmaceutical research has for instance been performed on a particular class of thermoresponsive or LCST polymeric systems: the thermoresponsive hydrogels.
A hydrogel is a polymeric network or three-dimensional structure that can absorb a substantial amount of water. Crosslinking facilitates mechanical strength and imparts physical integrity to the gels. Hydrogels in water exhibiting LCST behaviour will swell below the LCST temperature and shrink above the LCST temperature and therefore change in volume as a function of temperature. Thermoresponsive shrinking and swelling properties of hydrogels have been studied in relation to other applications, wherein the change in volume of the thermoresponsive hydrogel is for example used to operate a switch or a motor.

In WO 2006/057797 a switch structure or the like such as a valve, motor, or optical switch is disclosed which is constructed on the basis of a thermoresponsive polymer. It for example discloses a switch based on the operation of a thermoresponsive polymer wherein in response to a thermal stimulus, said thermoresponsive polymer will change from an expanded volume state to a contracted volume state, so that a conductor will contact another conductor in order to create a closed circuit which a current will flow through. Likewise, upon cooling the thermoresponsive polymer, the volume state of the polymer will expand, so that the conductors are no longer in contact with each other and the circuit becomes an open circuit with the current having a zero or nearly zero value.
For the disclosed valves, motors, and switches in this document to function, energy needs to be put into the system, so that the temperature of the medium which is in contact with the thermoresponsive polymer will either be increased or decreased.

However, it is an object of the present invention to provide a process and an apparatus for producing mechanical or electrical power, specifically from an aqueous stream, which is preferably an aqueous waste stream of for instance a chemical plant.

The objective has been met by providing a process wherein a LCST polymeric system is brought into contact with a first aqueous stream having a particular temperature to bring said LCST polymeric system in a first state and subsequently with a second aqueous stream with a particular temperature to bring the LCST polymeric system in a second state. By repeating this procedure, the osmotic pressure difference that is effectuated every time between the first and the second state can be used to generate mechanical or electrical power.

More particularly, the present invention relates to a process for producing mechanical or electrical power comprising a step of bringing a LCST polymeric system having an operating temperature within the range of 15 to 60°C sequentially and repeatedly into contact with a first aqueous stream to bring said polymer system in a first state, and with a second aqueous stream to bring said polymer system in a second state, in the course of which an osmotic pressure difference is effectuated between the first state and the second state by using a first aqueous stream having a temperature which is higher than the LCST of said polymer system when it is in contact with said first aqueous stream and a second aqueous stream having a temperature which is lower than the LCST of said polymer system when it is in contact with said second aqueous stream, and wherein said difference in osmotic pressure is used to generate mechanical or electrical power.

The operating temperature of the system is defined as the average of the the LCST temperature of the LCST polymeric system when in contact with the first aqueous stream and the LCST temperature of the LCST polymeric system when in contact with the second aqueous stream.

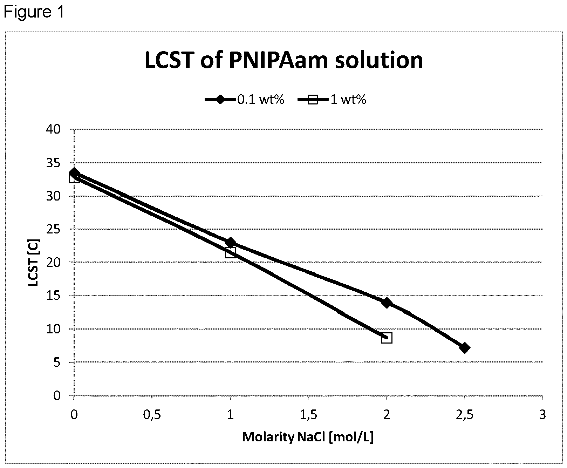

It is noted that use can be made of a first and a second aqueous stream that differ in temperature, of a first and a second aqueous stream that differ in solute concentration, or of a first and a second aqueous stream that differ in temperature and solute concentration. Figure 1 shows an example of how the LCST for a particular LCST polymeric system is affected by the concentration of a solute. In this example the solute is NaCl.
Furthermore, it is noted that the LCST temperature of the LCST polymeric system may have a different value in the first state than in the second state.

The osmotic pressure is generally defined as the pressure which needs to be applied to a solution to prevent the inward flow of solvent across a semipermeable membrane. In this context the osmotic pressure is defined as the free energy potential of the LCST polymeric system.

In one embodiment, the osmotic pressure difference manifests itself in a volume difference between the first and second states, thus effectuating a movement of said LCST polymeric system which is converted into mechanical or electrical power.
Preferably, the difference in osmotic pressure between the first state and the second state of the LCST polymeric system is used to generate a back and forth or rotating movement of a movable element which is converted into mechanical or electrical power using an electric generator.

In the process according to the present invention, two types of LCST polymeric systems can be used: a free gel system and a so-called "muscle" gel system.
The free gel-type LCST polymeric system is a crosslinked or uncrosslinked LCST polymeric system that has liquid-like properties, i.e. macroscopically it has no rigid shape, it will take the shape of its container. A free gel functions as follows: If it is contacted with an aqueous stream having a temperature lower than the LCST of the LCST polymeric system under the contacting conditions via a semi-permeable membrane, the LCST polymeric system will absorb water, which increases its volume. If it is contacted with an aqueous stream having a temperature above the LCST of the LCST polymeric system under the contacting conditions via a semi-permeable membrane, the LCST polymeric system will desorb water and the volume of the LCST polymeric system will decrease.
The muscle gel-type LCST polymeric system is a crosslinked LCST polymeric system that has solid-like properties, i.e. macroscopically it has a rigid shape, its shape will always stay geometrically similar. A muscle gel functions as follows: If it is contacted with an aqueous stream having a temperature lower than the LCST of the LCST polymeric system under the contacting conditions, the LCST polymeric system will absorb water and will swell, which increases its volume. If it is contacted with an aqueous stream having a temperature above the LCST of the LCST polymeric system under the contacting conditions, the LCST polymeric system will desorb water and will shrink, causing the volume of the LCST polymeric system to decrease.

In general, the muscle gel will have the advantage that direct contact with the aqueous streams is possible unlike in the case of the free gel, which always needs to be separated from the aqueous streams by a semi-permeable membrane. The fact that no membrane is needed improves heat and mass transfer and reduces the costs of the apparatus.
The free gel will have the advantage of having a larger volume change, which in general will lead to greater power production.

In an embodiment of the present invention, the LCST polymeric system is in the form of a cylindrical muscle having a diameter of between 0.1 and 10 mm.

The LCST polymeric system suitable for use in the process according to the present invention preferably is selected from the group consisting of a non-crosslinked LCST polymer, a LCST hydrogel, a LCST hydrogel copolymer, a semi-Interpenetrating Polymer Network gel with a LCST polymer, a semi-Interpenetrating Polymer Network gel with a LCST copolymer, a double network gel with a LCST polymer, a nanocomposite clay hydrogel, and a double network gel with a LCST (co)polymer.

For a free gel the LCST polymeric system preferably comprises a LCST hydrogel selected from the group consisting of poly(N-isopropylacrylamide (PNIPAAm) hydrogel, poly(N-vinylcaprolactam) hydrogel; a hydrogel based on polyethyleneglycol functionalized methacrylates, a hydrogel of poly[N-isopropylacrylamide (NIPA)-co-acrylic (AA)] hydrogel with a N,N-methylene bisacrylamide (BIS) crosslinker; a hydrogel of poly[N-isopropylacrylamide (NIPA)-co-acrylic (AA)] hydrogel with a N,N-methylene bisacrylamide (BIS) crosslinker imprinted by calcium chloride, a semi-IPN hydrogel of poly[N-isopropylacrylamide (NIPA)] hydrogel with a N,N-methylene bisacrylamide (BIS) crosslinker and sodium polyacrylates as the linear snake polymer, and a hydrogel prepared from N-isopropylacrylamide, N,N'-methylenebisacrylamide and tetramethoxysilane; or a double-network gel based on poly(2,2'-disulfonyl-4,4'-benzidine terphthalamide; or a semi-interpenetrating polymer network composed of poly(N-isopropylacrylamide) and polyacrylamide hydrogels. More preferably, the LCST polymeric system comprises a hydrogel selected from the group consisting of a hydrogel prepared from N-isopropylacrylamide (NIPAAm) and N-Pentamethyleneacrylamide (NPAAm) with a neutral monomer molar ratio NIPAAm : NPAAm of 0. 5 / 0.5 to 1: 0, molar equivalents of sodium acrylate between 0.01 and 0.5, and molar equivalents of n,n',-methylene-bisacrylamide between 0.0001 and 0.01.

For a muscle gel the LCST polymeric system preferably comprises a LCST hydrogel selected from the group consisting of a nanocomposite clay hydrogel based on poly(N-isopropylacrylamide (PNIPAAm) hydrogel and the inorganic clay Laponite RD, or a double network hydrogel based on poly(N-isopropylacrylamide (PNIPAAm) and N,N-methylene bisacrylamide (BIS) crosslinker. More preferably, the LCST polymeric system comprises a hydrogel selected from the group consisting of a hydrogel prepared from N-isopropylacrylamide (NIPAAm) and 2-10 wt% Laponite RD clay [Mg_{5.34}Li_{0.66}Si₈O₂₀-(OH)₄]Na_{0.66} using a 10:1 water/polymer weight ratio.

Preferably, the first aqueous stream according to the present invention, having a temperature higher than the LCST of the LCST polymeric system, is an aqueous waste stream of a chemical plant, preferably a coolant. The second aqueous stream, having a temperature lower than the LCST of the LCST polymeric system, is preferably selected from the group consisting of surface water, sea water, river water, and tap water.

In one embodiment, the first aqueous stream and/or the second aqueous stream comprises a solute wherein the difference between the solute concentration in the first stream and the solute concentration in the second stream lies between 0.01 mol/kg and 7 mol/kg, more preferably between 0.6 mol/kg and 6 mol/kg. The preferred solute is NaCl.

In a preferred embodiment of the present invention, the mechanical or electrical power generated is partly used to effectuate that the LCST polymeric system is alternately brought into contact with the first and second aqueous streams.

A process to make a polymeric system typically comprises the following steps.

A free gel can be obtained by the following procedure:
In general, a free gel is made by a free radical polymerization of at least a thermoresponsive monomer and a crosslinker. For example, in Xue, W., Champ, S., Huglin, M.B., Jones, T.G.J, European Polymer Journal, 40, 2004, 703-712, the synthesis of poly[N-isopropylacrylamide-co-acrylic(AA)] hydrogels has been described, which hydrogels show rapid swelling and deswelling when synthesized at low temperatures of -18 °C. In Tokuyama, H., Ishihara, N., Sakohara, S., European Polymer Journal, 43, 2007, 4976-4982, the synthesis of poly[N-isopropylacrylamide] hydrogels has been described using different solvent types, like water, ethanol, acetone, and N,N-dimethylformamide. In Tokuyama, H., Kanehara, A., Langmuir, 23, 2007, 11246-11251, the synthesis of spherical macroporous poly[N-isopropylacrylamide] hydrogels using oil in water emulsions has been described.

A muscle gel can be obtained by the following procedure:
In general a, muscle gel can be made as a nanocomposite clay hydrogel using a free radical polymerization of at least a thermoresponsive monomer and a clay particle, as shown in Haraguchi, K., Takeshisa, T., Fan, S, Macromolecules, 35, 2002, 10162-10171, in which a hydrogel is made from N-isopropylacrylamide and the inorganic clay, synthetic hectorite "Laponite XLG". A muscle gel can also be made as a double network gel using two consecutive free radical polymerizations, as shown in Gong, J.P., Katsuyama, Y., Kurokawa, T., Osada, Y., Advanced Materials, 15, 2003, 1155-1158, in which double network hydrogels were synthesized consisting of acrylamide and 2-acrylamido-2-methylpropane sulfonic acid monomers.

The present invention furthermore relates to an apparatus for producing mechanical or electrical power from at least two aqueous streams.
In one embodiment, it relates to an apparatus comprising:
- means for keeping the LCST polymeric system in position,
- an inlet for a first aqueous stream having a temperature higher than the LCST of said LCST polymeric system, the LCST being the LCST when in contact with said first aqueous stream.
- an inlet for a second aqueous stream having a temperature which is lower than the LCST of said LCST polymeric system, the LCST being the LCST when in contact with said second aqueous stream,
- an element which can be set for allowing either said first aqueous stream or said second aqueous stream to be in contact with said polymeric system,
- an outlet for the first aqueous stream and an outlet for the second aqueous stream,
- a movable element mechanically coupled with said LCST polymeric system for moving from a first position in which said LCST polymeric system is in a first volume state to a second position in which said LCST polymeric system is in a second volume state, and which movable element is preferably functionally coupled with the element for allowing either said first aqueous stream or said second aqueous stream to be in contact with said LCST polymeric system depending on the position of said movable element, and
- means for converting movement into mechanical or electrical power.

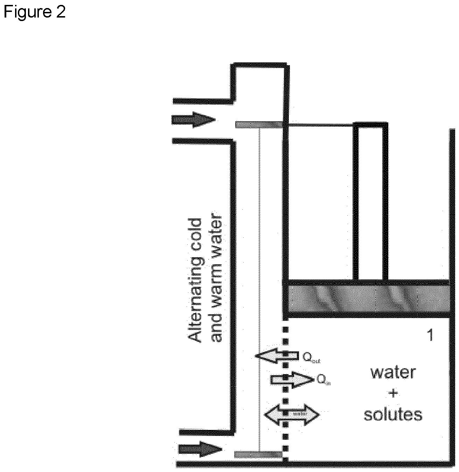

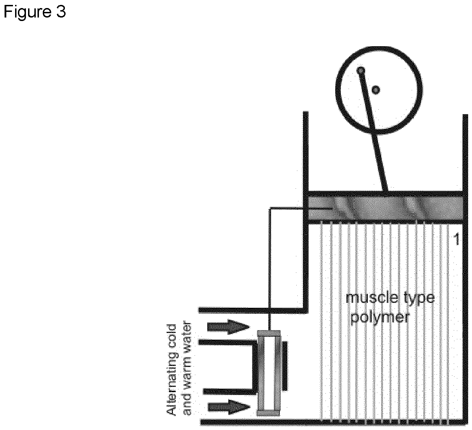

Examples of such an embodiment for a free gel and muscle gel apparatus have been given in Figures 2 and 3. In Figure 2, the water streams are alternating. A valve system may be used to switch between warm and cold water streams. A changing osmotic pressure in 1 (water + solutes) leads to water permeation through the membrane, which induces piston movement. In Figure 3, a valve system may be used to switch between warm and cold water streams. A changing osmotic pressure inside the muscle polymer fibre leads to a contraction movement, which induces piston movement.
The element which can be set for allowing either said first aqueous stream or said second aqueous stream to be in contact with said LCST polymeric system can be a valve. Preferably, said element is a pulley.
The skilled person will understand that said movable element, which is mechanically coupled with said LCST polymeric system for moving from a first position in which said LCST polymeric system is in a first volume state to a second position in which said LCST polymeric system is in a second volume state, may be the same element as the element for allowing either said first aqueous stream or said second aqueous stream to be in contact with said LCST polymeric system.

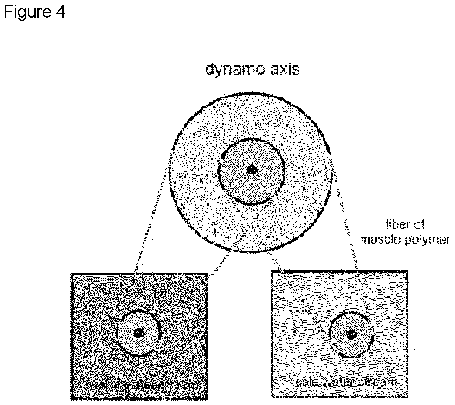

An example of an apparatus according to such an embodiment is given in Figure 4. The fibre of the muscle polymer type in Figure 4 shrinks in a warm water stream. Equal tension forces are produced on both sides of the "warm water" pulley. The fibre ends are attached to different sized pulleys, so they will exert different torques, resulting in a rotating movement. In a cold water stream the fibre is cooled to be used again. With a proper design of fibre lengths and pulley sizes a continuous movement can be created.

The LCST polymeric system in the apparatuses according to the present invention is discussed in detail above. The means for keeping the LCST polymeric system in position is preferably a membrane in the case of a free gel system. In the case of a free gel it is not possible to have direct contact between the LCST polymeric system and the aqueous streams. Without any means for keeping the LCST polymeric system in position, the LCST polymeric system would be washed away in the aqueous stream. In the case of a muscle system direct contact between the LCST polymeric system and the aqueous streams is possible. However, means should be in place to attach the muscle at the top and bottom sides, so that it will be kept in position.
The movable element is preferably a piston attached to a rotating disk.
The means for converting movement into mechanical or electrical power preferably comprises an electric generator, preferably a turbine.

In one embodiment, at least two LCST polymeric systems are placed in serial order.

The present invention is further illustrated by the following non-limiting Example.

### Example

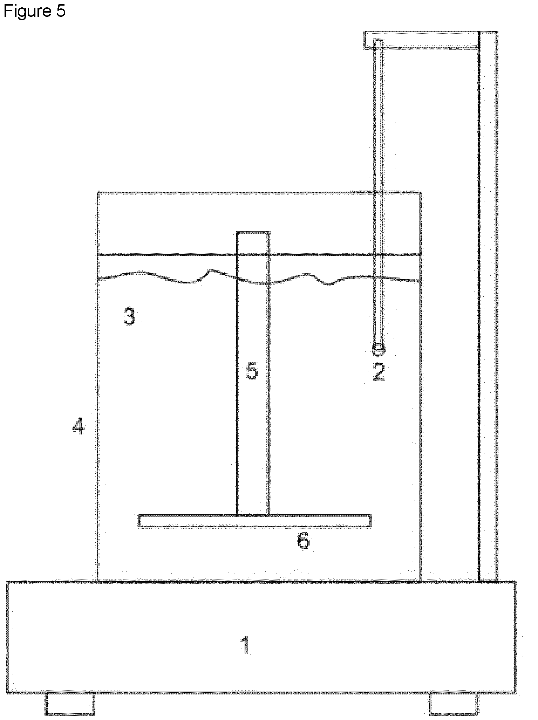

This experiment demonstrates that an amount of net work can be extracted from the LCST polymeric system of the present invention by applying multiple heating/cooling cycles, making use of the system's swelling and shrinking ability.
The experimental setup (see Figure 5 - Schematic representation of the experimental setup) consists of a closed container (4) filled with water (3). The container was placed on a heating device (1), which was externally controlled by means of a thermometer (**2**). During the experiment no stirring was allowed to prevent the addition of mechanical energy to the water, so heat transfer only occurred by diffusion and conduction. An experiment has been performed in which synthesized hydrogel NC1 (as the LCST polymeric system) was subjected to multiple cooling/heating cycles. A frictional surface plate (**6**) was attached to the bottom part of the hydrogel cylinder (**5**) to provide the gel with a load that can be lifted during a shrinking process by contraction and that will be lowered during swelling by extension of the gel. The frictional plate has a much larger surface area as compared to the gel and creates friction with the surrounding water layers during shrinking and swelling, which results in the production of friction work in both directions. When no net work can be delivered during one shrinking-swelling cycle, multiple cycles will lead to slow convergence of the cyclic movement to a steady state extension (i.e. a form of damping oscillation). On the other hand, when no damping occurs, the gel will continuously keep moving up and down as long as it comes into contact with warm and cold water, respectively.

Details regarding the experiment are given in Table 1. The period between a heating and a cooling process was approximately one day. The extensions were measured at equilibrium.

**Table 1: Experimental details**

| ***Hydrogel*** | ***Medium*** | **hydrogel** | | **frictional plate** | | ***cycles*** |
|---|---|---|---|---|---|---|
| | | ***length [cm]*** | ***diameter [cm]*** | ***surface area [cm²]*** | ***mass [g]*** | |
| **NC1** | tap water | ~9 | 2.7 | 64 | 71 | 10 |

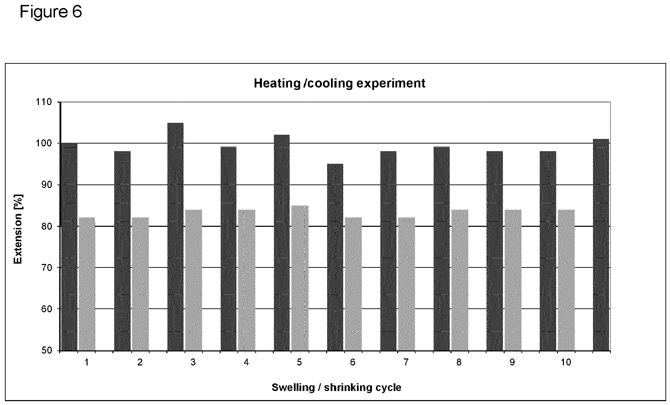

In Figure 6 it is shown that within 10 heating/cooling cycles there is no sign indicating a structural loss in extension or damping effect (The extension of the hydrogel for multiple subsequent heating/cooling cycles. The initial length was taken as 100%). Given that the number of oscillations exceeds at least 10 and knowing that some amount of frictional work has been produced in each step leads to the conclusion that an amount of net work has been produced. The total amount of net work is estimated to be approximately 300 J.

### Details of hydrogel NC1, a nanocomposite (NC) hydrogel:

Hydrogel **NC1** was obtained via a versatile and simple synthetic method. First a transparent aqueous solution of inorganic clay Laponite RD: [Mg_{5 34}Li_{0 66}Si₈O₂₀-(OH)₄]Na_{0 66}, N-isopropylacrylamide (NIPAAm), and tetramethylethylenediamine (TMEDA) was prepared in a 50 mL PP bottle. Next the solution was poured into a dialysis membrane bag of MWCO 12000-14000. Next an aqueous solution of initiator (potassium persulfate, KPS) was added in the absence of oxygen. Free-radical polymerization was allowed to proceed at room temperature for 20 h. The gels were purified by immersion in water at room temperature and then at 80°C changing the water several times. The composition of the gel is given in Table 2.

**Table 2: Content of NC1 and NC2 prepared in dialysis membrane tubing bag**

| **Gel n°** | **Clay (wt % in soltution)** | **water / pol. (wt / wt)** | **mol% clay in gel** | **Diameter membrane / tubing (cm)** |
|---|---|---|---|---|
| **NC1** | 3.1 | 10/1 | 5 | 2.86 |
| **NC2** | 5.9 | 10/1 | 10 | 2.86 |

## Claims

1. A process for producing mechanical or electrical power comprising a step of bringing a LCST polymeric system having an operating temperature within the range of 15 to 60°C sequentially and repeatedly into contact with a first aqueous stream to bring said polymer system in a first state and with a second aqueous stream to bring said polymer system in a second state, in the course of which an osmotic pressure difference is effectuated between the first state and the second state by using a first aqueous stream having a temperature which is higher than the LCST of said polymer system when it is in contact with said first aqueous stream and a second aqueous stream having a temperature which is lower than the LCST of said polymer system when it is in contact with said second aqueous stream, and wherein said difference in osmotic pressure is used to generate mechanical or electrical power.

2. A process according to claim 1, wherein the osmotic pressure difference manifests itself in a volume difference between the first and second states, thus effectuating a movement of said LCST polymeric system which is converted into mechanical or electrical power.

3. A process according to claim 1 or 2, wherein the difference in osmotic pressure is used to generate a back and forth or rotating movement of a movable element which is converted into mechanical or electrical power using an electric generator.

4. A process according to any one of the preceding claims, wherein the LCST polymeric system is selected from the group consisting of a non-crosslinked LCST polymer, a LCST hydrogel, a LCST hydrogel copolymer, a semi-Interpenetrating Polymer Network gel with a LCST polymer, a semi-Interpenetrating Polymer Network gel with a LCST copolymer, a double network gel with a LCST polymer, and a double network gel with a LCST (co)polymer.

5. A process according to claim 4, wherein the LCST polymeric system comprises a LCST hydrogel selected from the group consisting of poly(N-isopropylacrylamide (PNIPAAm) hydrogel, poly(N-vinylcaprolactam) hydrogel; a hydrogel based on polyethyleneglycol functionalized methacrylates, a hydrogel of poly[N-isopropylacrylamide (NIPA)-co-acrylic (AA)] hydrogel with a N,N-methylene bisacrylamide (BIS) crosslinker; a hydrogel of poly[N-isopropylacrylamide (NIPA)-co-acrylic (AA)] hydrogel with a N,N-methylene bisacrylamide (BIS) crosslinker imprinted by calcium chloride, a semi-IPN hydrogel of poly[N-isopropylacrylamide (NIPA)] hydrogel with a N,N-methylene bisacrylamide (BIS) crosslinker and sodium polyacrylates as the linear snake polymer, and a hydrogel prepared from N-isopropylacrylamide, N,N'-methylenebisacrylamide and tetramethoxysilane; or a double-network gel based on poly(2,2'-disulfonyl-4,4'-benzidine terphthalamide; or a semi-interpenetrating polymer network composed of poly(N-isopropylacrylamide) and polyacrylamide hydrogels, the LCST polymeric system more preferably comprising a hydrogel selected from the group consisting of a hydrogel prepared from N-isopropylacrylamide (NIPAAm) and N-Pentamethyleneacrylamide (NPAAm) with a neutral monomer molar ratio NIPAAm : NPAAm of 0. 5 / 0.5 to 1: 0, molar equivalents of sodium acrylate between 0.01 and 0.5, and molar equivalents of n,n',-methylene-bisacrylamide between 0.0001 and 0.01.

6. A process according to claim 4, wherein the LCST polymeric system comprises a LCST hydrogel selected from the group consisting of a nanocomposite clay hydrogel based on poly(N-isopropylacrylamide (PNIPAAm) hydrogel and the inorganic clay Laponite RD, or a double network hydrogel based on poly(N-isopropylacrylamide (PNIPAAm) and N,N-methylene bisacrylamide (BIS) crosslinker.

7. A process according to any one of the preceding claims, wherein the first aqueous stream, having a temperature higher than the LCST of the LCST polymeric system, is an aqueous waste stream of a chemical plant, preferably a coolant.

8. A process according to any one of the preceding claims, wherein the second aqueous stream, having a temperature lower than the LCST of the LCST polymeric system, is selected from the group consisting of surface water, sea water, river water, and tap water.

9. A process according to any one of the preceding claims, wherein the first aqueous stream and/or the second aqueous stream comprises a solute wherein the difference between the solute concentration in the first stream and the solute concentration in the second stream lies between 0.01 mol/kg and 7 mol/kg.

10. A process according to any one of the preceding claims, wherein the LCST polymeric system is in the form of a cylindrical muscle having a diameter of between 0.1 and 10 mm.

11. An apparatus for producing mechanical or electrical power from at least two aqueous streams comprising
- means for keeping the LCST polymeric system in position,
- an inlet for a first aqueous steam having a temperature higher that the LCST of said LCST polymeric system,
- an inlet for a second aqueous stream having a temperature which is lower than the LCST of said LCST polymeric system,
- an element which can be set for allowing either said first aqueous stream or said second aqueous stream to be in contact with said LCST polymeric system,
- an outlet for the first aqueous stream and an outlet for the second aqueous stream,
- a movable element mechanically coupled with said LCST polymeric system for moving from a first position in which said LCST polymeric system is in a first volume state to a second position in which said LCST polymeric system is in a second volume state, and which movable element is preferably functionally coupled with the element for allowing either said first aqueous stream or said second aqueous stream to be in contact with said LCST polymeric system depending on the position of said movable element, and
- means for converting movement into mechanical or electrica power.

12. An apparatus according to claim 11, wherein the LCST polymeric system comprises a LCST hydrogel selected from the group consisting of poly(N-isopropylacrylamide (PNIPAAm) hydrogel, poly(N-vinylcaprolactam) hydrogel; a hydrogel based on polyethyleneglycol functionalized methacrylates, a hydrogel of poly[N-isopropylacrylamide (NIPA)-co-acrylic (AA)] hydrogel with a N,N-methylene bisacrylamide (BIS) crosslinker; a hydrogel of poly[N-isopropylacrylamide (NIPA)-co-acrylic (AA)] hydrogel with a N,N-methylene bisacrylamide (BIS) crosslinker imprinted by calcium chloride, a semi-IPN hydrogel of poly[N-isopropylacrylamide (NIPA)] hydrogel with a N,N-methylene bisacrylamide (BIS) crosslinker and sodium polyacrylates as the linear snake polymer, and a hydrogel prepared from N-isopropylacrylamide, N,N'-methylenebisacrylamide, and tetramethoxysilane; or a double-network gel based on poly(2,2'-disulfonyl-4,4'-benzidine terphthalamide; or a semi-interpenetrating polymer network composed of poly(N-isopropyl acrylamide) and polyacrylamide hydrogels;
or
a LCST hydrogel selected from the group consisting of a nanocomposite clay hydrogel based on poly(N-isopropylacrylamide (PNIPAAm) hydrogel and the inorganic clay Laponite RD, or a double network hydrogel based on poly(N-isopropylacrylamide (PNIPAAm) and N,N-methylene bisacrylamide (BIS) crosslinker.

13. An apparatus according to claim 12, wherein the LCST polymeric system is in the form of at least one muscle having a diameter of between 0.1 and 10 mm.

14. An apparatus according to any one of claims 11-13, wherein the means for converting movement into mechanical or electrical power comprises an electric generator, preferably a turbine.

15. An apparatus according to any one of claims 11-14, wherein at least two LCST polymeric systems are placed in serial order.
